# EUROPEAN PATENT APPLICATION

(11) **EP 4 535 721 A1**
(43) Date of publication of application: **09.04.2025**
(21) Application number: 23306664.6
(22) Date of filing: 02.10.2023
(51) Int. Cl.: H04L 9/40, G06F 16/955, G06Q 10/08, H04L 9/32

(54) **METHOD AND SYSTEM IMPLEMENTING SECURE OPERATIONS WITH NETWORK RESOURCE IDENTIFIERS**

(71) Applicant: Mobilead, 75008 Paris (FR); ATT Advanced Track and Trace, 92500 Rueil-Malmaison (FR)
(72) Inventor: TONNELIER, Laurent, 75008 PARIS (FR); SAGAN, Zbigniew, 92500 RUEIL-MALMAISON (FR)
(74) Representative: Atout PI Laplace

(57) **Abstract**

The invention takes advantage of certain characteristics of the URI specification to incorporate cryptographic content in such a way that the ordinary operation of a URI is not interfered with. The cryptographic content can then be used to ensure the authenticity of the path defined in the unencrypted portion. The path may also serve to point a reading device to a network resource capable of performing the decryption operation, or for a decryption key.

## Description

### Field of the invention

The invention relates to URI based seals, which may be implemented in a machine readable format.

### Background of the invention

Over recent decades, data has tended to migrate from physical support such a paper document to the digital realm. Nevertheless, there remain many cases where data must be embodied physically. Example include product labels, reference codes in printed communications, public signs, and the like, and may extend from simple reference codes to the complete content of a document.

While such scenarios may assume a need for human readability, the general trend toward digital processing means that is desirable for such information to be presented in a form which is also suitable for machine interpretation. Many such representations exist.

As internet technology has developed through the twentieth century a number of different mechanisms for making a connection between an object and an electronic information handling system have been developed. Punched cards were developed as the original input means for computing devices, and the possibility of using similar cards was quickly identified as a rapid means of registering the sale of an object. A major development in this field came with the development of the Universal Product Code system, based on the reading of a two dimensional barcode with a laser scanner.

In the area of Consumer-Packaged Goods (CPG), Global Trade Identifiers Numbers (GTINs) are used to identify products using labels and printed packaging. The linear barcode is a visual representation of the GTIN number written below. The last digit of the 13 digits number of the GTIN is a key. The key, also called check digit, is used to verify if the first 12 digits are correct and not corrupted.

On the basis of this and related technologies, virtually all packaged consumer goods today are provided with such a code. More recently, matrix, or two dimensional bar codes, such as "QR Codes" (registered trade mark in some jurisdictions) described as example in US patent referenced US5726435 have become common. Such codes are able to encode more information in a small area than conventional one dimensional bar codes, and as such are frequently used to encode a Uniform Resource Indicator. Meanwhile, in addition to these optical solutions, radio based tagging solutions such as those based on RFID tags are increasingly widespread.

The widespread use of such codes quickly raises the issue of security, where it becomes necessary to verify the authenticity, accuracy or validity of a particular code.

Cryptographic solutions to such issues include the **Visible Digital Seal** (VDS), a cryptographically signed data structure (Electronically signed encoded data set, ESEDS) which may be encoded in a two-dimensional barcode symbology, usually a Datamatrix code, a OR code or a Han Xin.

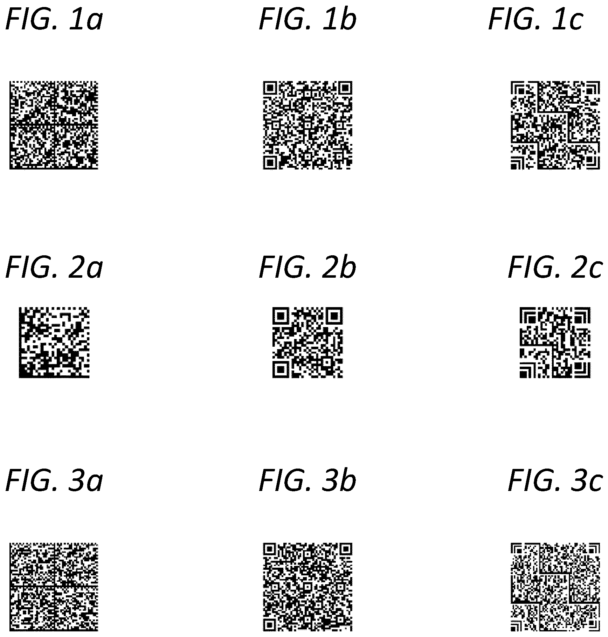

Figure 1a presents an example of a **Visible Digital Seal in a Datamatrix format.**

Figure 1b presents an example of a **Visible Digital Seal in a QR code format.**

Figure 1c presents an example of a **Visible Digital Seal in a Han Xin format.**

The code contains the essential information of the respective document as well as a digital signature that protects against data manipulation. Visible Digital Seals (VDS) aim to guarantee the authenticity and integrity of documents in a cost-effective and secure manner using asymmetric cryptography. Possible applications of VDS include identity cards, passports, product passports, certificates, tax stamps or any other document whose authenticity and integrity must be guaranteed.

The following series of characters is an example of the signature portion of an ESDS Visible Digital Seal:

The general use case for such codes at the intersection between physical objects and computer systems implicitly includes the very wide range of scenarios in which the code may need to be read, given the mobility and durability of such physical objects - there is no knowing how, when or where is may be desired to read the code. On the other hand, a cryptographic structure such as the VDS presented above is generally a somewhat opaque construct whose format must be known a priori in order for it be successfully interpreted. This means that in practice, a general purpose interface will be unable to process or interpret data so encoded, and a dedicated reader is required. For example, in a typical prior art scenario an ESEDS Visible Digital Seal, encoded in a two-dimensional barcode, a Datamatrix, a OR Code or a Han Xin, may only be read by a dedicated application, such as a specific secured mobile application, with no internet connection required if it is assumed that the type of VDS use case is already known from the mobile application.

It is desired to provide a mechanism whereby general purpose data interfaces may handle data incorporated cryptographic authentication components.

### Summary of the invention

In accordance with the present invention in a first aspect there is provided a computer implemented method of defining a secure network resource identifier structure, comprising defining a Uniform Resource Identifier (URI) having scheme and path components identifying a network resource, and associating the scheme and path components with a fragment and/or query portion comprising a cryptographically signed data structure.

In accordance with the present invention in a second aspect there is provided computer implemented method of defining a secure network resource identifier structure, comprising defining a Uniform Resource Identifier (URI) having scheme and path components identifying a network resource, associating the scheme and path components with a path portion suffix comprising a cryptographically signed data structure constituting a unique identifier.

In a development of the first or second aspects, there is provided a further step of encoding the secure network resource identifier structure in a machine readable code.

In a development of the first or second aspects, the Uniform Resource Identifier points to a repository from which a software application capable of verifying that the path component corresponds to the signed data structure may be retrieved.

In accordance with the present invention in a third aspect there is provided a method of accessing a network resource comprising receiving a secure network resource identifier structure in accordance with the first or second aspects, decrypting the cryptographically signed data structure, verifying that the path component corresponds to the signed data structure, and responsive to the verification, accessing the network resource specified by the Uniform Resource Identifier.

In a development of third aspect there is provided a further step of receiving the secure network resource identifier structure at a user device, wherein the step of verifying that the path component corresponds to the signed data structure is performed at one of the user device or a remote server identified by the path component.

In accordance with the present invention in a fourth aspect there is provided a method of decoding a secure network resource identifier structure, comprising receiving a secure network resource identifier structure in accordance with embodiments as set out above, identifying a characteristic structure of a schema known to be used with secure network resource identifier structures in accordance with embodiments as set out above, isolating a part of the secure network resource identifier structure known to correspond to a unique identifier in accordance with the schema, and attempting to decrypt the isolated part of the secure network resource identifier structure.

In a development of fourth aspect the cryptographically signed data structure comprises a further data payload, and the method comprises a further step of retrieving reference data from the network resource specified by the path component, and comparing the reference data with the further data payload.

In a development of third or fourth aspect the cryptographically signed data structure comprises a further data payload, and the method comprises a further step of identifying a characteristic of the secure network resource identifier structure associated with a further network resource, and retrieving reference data from the further network resource, and comparing the reference data with the further data payload.

In accordance with the present invention in a fifth aspect there is provided a method of associating a unique identifier with a product, wherein the product belongs to an arborescent product classification, the method comprising the steps of composing a URI based on the classification of the product according to the arborescent product classification, obtaining an cryptographically signed data structure with respect to the URI in accordance with claim 1, and associating the cryptographically signed data structure with the product as the unique identifier.

In accordance with the present invention in a sixth aspect there is provided a data processing system comprising means for carrying out the first, second, third, fourth or fifth aspects.

In accordance with the present invention in a seventh aspect there is provided a computer program comprising instructions which, when the program is executed by a computer, cause the computer to carry out the out the first, second, third, fourth or fifth aspects.

In accordance with the present invention in a eighth aspect there is provided a computer-readable medium comprising instructions which, when the program is executed by a computer, cause the computer to carry out the first, second, third, fourth or fifth aspects.

In accordance with the present invention in a ninth aspect there is provided a secure network resource identifier structure, comprising a Uniform Resource Identifier (URI) having scheme and path components identifying a network resource, and a fragment and/or query portion comprising a cryptographically signed data structure.

In accordance with the present invention in a tenth aspect there is provided a secure network resource identifier structure, comprising a Uniform Resource Identifier (URI) having scheme and path components identifying a network resource, associating the scheme and path components and a path portion suffix comprising a unique identifier and a cryptographically signed data structure.

### Brief Description of the Drawings

The above and other advantages of the present invention will now be described with reference to the accompanying drawings, in which:
Figure 1a presents an example of a Visible Digital Seal in a Datamatrix format;
Figure 1b presents an example of a Visible Digital Seal in a OR code format;
Figure 1c presents an example of a Visible Digital Seal in a Han Xin format;
Figure 2a presents an example of a URI encoded in a Datamatrix format;
Figure 2b presents an example of a URI encoded in a OR code format;
Figure 2c presents an example of a URI encoded in a Han Xin format;
Figure 3a presents an example of a URI incorporating a cryptographic component, encoded in a Datamatrix format;
Figure 3b presents an example of a URI incorporating a cryptographic component, encoded in a OR code format;
Figure 3c presents an example of a URI incorporating a cryptographic component, encoded in a Han Xin format;
Figure 4a summarizes a method in accordance with this first set of embodiments;
Figure 4b summarizes a method in accordance with this second set of embodiments;
Figure 5a presents a method of decoding a secure network resource identifier structure as introduced with reference to figure 4a.
Figure 5b presents a method of accessing a network resource in accordance with an embodiment;
Figure 6 presents various use case scenarios arising from embodiments;
Figure 7 shows a generic computing system suitable for implementation of embodiments of the invention; and
Figure 8 shows a smartphone device adaptable to constitute an embodiment.

### Detailed description

A very widely adopted data structure is the The Web URI (Uniform Resource Identifier). The URI is a string of characters used to identify a resource. The Web URL (Uniform Resource Locator) may be an information resource such as a Web page - as described in Request for Comments RFC 3986: Uniform Resource Identifier (URI): Generic Syntax.

The basic structure of the URI is set out below:
scheme:[//authority][/path][?query][#fragment]

For example, a typical URI may take the form:
http://machine.domain:port/path/data?key=value#fragid

The URI path information consists of a sequence of path segments separated by a slash ("/") character. The path component contains data, usually organized in hierarchical form. The path is terminated by the first question mark ("?") character, by the end of the URI, or the number sign ("#") character - as described in RFC 3986 Section-3.3.

The URI query contains non-hierarchical data that, along with data in the path component, serves to identify a resource within the scope of the URI's scheme and naming authority. The data in the hierarchical path component, along with data in the non-hierarchical query component, serves to identify a resource within the scope of the URI's scheme and naming authority. The query component is indicated by the first question mark ("?") character, followed by ampersand ("&") character. Query components are used to carry identifying information in the form of "&key=value" pairs - as described in RFC 3986 Section-3.4.

An example of a URI formed in accordance with the GS1 Digital Link standard:
https://zt.ag/01 /03779000004901/22/01/10/001/21/0001
https://zt.ag/01/03779000004901/22/01/10/001?17=230701

In this case the value "230701" may represent a product expiry date for example.

An example of a URI comprising an AutolD URL containing data in conformance with ANSI MH10.8.2 norm may take the form:
https://zt.ag/?.8P=03779000004901&.1T=001 &.S=0001
https://zt.ag/?.8P=03779000004901&.1T=001.5D=230701036

In this case the value "230701" may represent a product expiry date for example, and 036 indicates the date format YYMMDD.

The URI fragment identifier component of a URI allows indirect identification of a secondary resource by reference to a primary resource and additional identifying information. The identified secondary resource may be some portion or subset of the primary resource, some view on representations of the primary resource, or some other resource defined or described by those representations - as described in RFC 3986 Section-3.5.

A fragment identifier component is indicated by the presence of a number sign ("#") character and terminated by the end of the URI. A typical use of a URI fragment identifier is to provide a direct link to a specific section within an HTML page, a Web document. Via the number character ("#"), you can complete the call to an HTML page. This call is neutral. This has no impact on getting the page. It is the local browser that performs the local navigation in the page obtained.
https://zt.ag/01/03779000004901/22/01/10/001/21/001#hello_world
https://zt.ag/?.8P=03779000004901&.1T=001&.S=0001#hello_world

It is furthermore common to represent URIs in a machine readable format.

The machine readable format may take any form. By way of example:
- it may be optically readable, for instance in the form of an image, an alphanumeric code, or a one, two (including "QR" codes) or three dimensional bar code, or a holographic code. The code may be disposed together with other visual content, for example by steganography or any other invisible code.

Optical reading, by way of a camera, laser scanner etc, has a security advantage over radio communications in that it requires a line of sight and specified alignment with the object, making covert reading of the object difficult. Consumer devices are very frequently provided with a camera device, meaning that such readers can be implemented without addition of dedicated special hardware.
- It may be magnetically readable, for example in the form of a magnetic strip.
- It may be readable by radio communication, for example by RFID, NFC or Bluetooth Low Energy systems.

Radio communications have the advantage of not requiring physical contact, or even line of sight between the object and a reader. Short range radio communication enhances the security and avoid by construction man in the middle attacks. Short range radio communications are increasingly used in consumer devices, meaning that such readers can be implemented without special hardware.
- It may be readable acoustically, or as a sound wave emitted by the object, either continuously, periodically or in response to stimulation by a user or generated by the user device implementing the invention. This stimulation may be mechanical, sonic, electronic, optical or by any other suitable mechanism.

Although sound waves do not require physical contact, or even line of sight between the object and a reader, they are subject to diffusion and interference inherently limiting the range at which they can be used. As such, in some implementations sound waves can offer a compromise between the characteristics of optical and radio reading. Consumer devices are often provided with microphone (and loudspeaker), meaning that such readers (respectively sound emitter) can be implemented without special hardware.
- It may be readable as a tactile or palpable code, for example in the form of punched indentations or bumps, which may be read by optical or mechanical means.

A preferred approach is to use a graphical machine readable format such as a Datamatrix, QR code or Han Xin code.

Figure 2a presents an example of a URI encoded in a Datamatrix format.

In particular, figure 2a shows a representation of the URI
https://zt.ag/01/03779000004901/22/01/10/001/21/0001 encoded in a Datamatrix format.

Figure 2b presents an example of a URI encoded in a OR code format.

In particular, figure 2b shows a representation of the URI
https://zt.ag/01/03779000004901/22/01/10/001/21/0001 encoded in a OR code format.

Figure 2c presents an example of a URI encoded in a Han Xin format.

In particular, figure 2c shows a representation of the URI
https://zt.ag/01/03779000004901/22/01/10/001/21/0001 encoded in a Han Xin format.

A URI, for example encoded in a OR Code or otherwise can be read by most modern mobile devices, since the capability to scan such Codes is included in most existing mobile devices, only using the camera.

Meanwhile, a URL may point to a remote host server, yet be processed locally in the device, or remotely on another remote server different from the one specified in the URL, set by the mobile app on the device. This is what a point of sale (POS) is able to do with a URI comprising an AutolD URL containing data in conformance for example with GS1 Digital Link or ANSI MH10.8.2, to retrieve the GTIN (Global Trade Item Number, Application Identifier 01 or Data Identifier .8P in ANSI MH10.8.2) to find the correct price of a given product.

In accordance with the present invention, cryptographic information is incorporated in a URI structure.

In particular, there is provided in a first approach a method of defining a secure network resource identifier structure, the secure network resource identifier structure comprising a Uniform Resource Identifier (URI) having scheme and path components identifying a network resource, and a fragment and/or query portions comprising a cryptographically signed data structure.

The cryptographically signed data structure may conform to a Visible Digital Seal format, a Verifiable Credential model, or any other cryptographic model, including for example Public Key Infrastructure cryptographic schema.

On this basis, by way of example, a URI as follows may be obtained:

In this example, the portion following the # symbol constitutes a fragment in accordance with RFC 3986, and it is this portion that incorporates the cryptographic content. By including the cryptographic content in the fragment portion, the URI remains intelligible to any standard device or system capable of interpreting generic URIs. The hierarchical portion may point to additional resources that may then enable the device or system to handle the cryptographic portion. In a worst case, the fragment portion may simply be ignored.

In addition, the cryptographic content could also be processed distantly by the remote host server, or any remote server, different from the one specified in the URL as defined by the mobile application on the device. This may be achieved by the local device being configured to recognize the general format of the cryptographic content, and to contact the remote server accordingly, or by further addressing data incorporated in the fragment portion.

Accordingly, while ordinarily the device might be expected to access the resource indicated by HTTPS://ZT.AG/01/03779000004901/22/01/10/001/21/0001, as a result of the decryption of the cryptographic content

in accordance with embodiments, the device may access any other resource as may be specified in the cryptographic content (and/or as indicated by a selected portion of the scheme and/or path portions), as determined programmatically, or otherwise.

Optionally, the path element of the secure Uniform Resource Identifier may point to a repository from which a software application capable of verifying that the Uniform Resource Identifier corresponds to the signed data structure may be retrieved. For example, URI (or graphical code representing it) could be read to download and install a secured mobile application from the network resource indicated by the hierarchal portion of the URI. This application could be then used to (re)scan the very same URI in order to read and process the cryptographic part of the URI.

Preferably, to be combined with a URI, the cryptographic content should contain a character set that conforms to the URL requirements. Other characters than those included in the Base 64 safe URL ('A' to 'Z', 'a' to 'z', '0' to '9', '-' and '_') should preferably not be used.

Optionally, the method may comprise a further step of encoding the secure network resource identifier structure in a machine readable code, such as for example a datamatrix, han xin, jab-code or qr code.

Figure 3a presents an example of a URI incorporating a cryptographic component, encoded in a Datamatrix format.

In particular, figure 3a shows a representation of the URI
HTTPS://ZT.AG/01/03779000004901/22/01/10/001/21/0001#3YBGMNJGEUM43777 DRR637K2AA3NSNDIOR2HA4Z2F4XXU5BOMFTS6MBRF4YDGNZXHEYDAMBQG A2DSMBRF4ZDELZQGEXTCMBPGAYDCLZSGEXTAMBQGHQIZDE4VZOB4HZAV TU27JQNQHKCZOKG4ZQP3L3LK5BLKULDCGEMXHGTB2SMS7FUAUYF36K226 FUDIKFZUKMYAFMW27OIXIAIYIAAZUG encoded in a Datamatrix format.

Figure 3b presents an example of a URI incorporating a cryptographic component, encoded in a OR code format.

In particular, figure 3b shows a representation of the URI
HTTPS://ZT.AG/01/03779000004901/22/01/10/001/21/0001#3YBGMNJGEUM43777 DRR637K2AA3NSNDIOR2HA4Z2F4XXU5BOMFTS6MBRF4YDGNZXHEYDAMBQG A2DSMBRF4ZDELZQGEXTCMBPGAYDCLZSGEXTAMBQGHQIZDE4VZOB4HZAV TU27JQNQHKCZOKG4ZQP3L3LK5BLKULDCGEMXHGTB2SMS7FUAUYF36K226 FUDIKFZUKMYAFMW27OIXIAIYIAAZUG encoded in a OR code format.

Figure 3c presents an example of a URI incorporating a cryptographic component, encoded in a Han Xin format.

In particular, figure 3c shows a representation of the URI
HTTPS://ZT.AG/01/03779000004901/22/01/10/001/21/0001#3YBGMNJGEUM43777 DRR637K2AA3NSNDIOR2HA4Z2F4XXU5BOMFTS6MBRF4YDGNZXHEYDAMBQG A2DSMBRF4ZDELZQGEXTCMBPGAYDCLZSGEXTAMBQGHQIZDE4VZOB4HZAV TU27JQNQHKCZOKG4ZQP3L3LK5BLKULDCGEMXHGTB2SMS7FUAUYF36K226 FUDIKFZUKMYAFMW27OIXIAIYIAAZUG encoded in a Han Xin format.

By combining cryptographic content such as a Visible Digital Seal and a URI in a two-dimensional barcode symbology, such as a OR Code, not only can the result be read and process locally by a specific application, but also could be conventienly read by most mobile devices and other suitable devices (smart phones, tablets, laptop computers, smart tvs, etc.) without any specific application needed.

While the embodiment of figure 3 uses the fragment portion of a URI to contain cryptographic content, other approaches are envisaged.

In one alternative set of embodiments, cryptographic content may be added a query section of the URI. In accordance with RFC 3986 Section-3.5, a query section is demarked by the sequence variable = value. It may be noted the query sections are also defined by the presence of a "?" or "&" symbol, in that queries in the first instance take the form "?Key1=val1" and in later instances take the form "&key2=val2. Since an "_" appears in all cases (an nowhere else in a valid URI) this may be taken in all cases to indicate the instantiation of a query.

The following URI is an example of the incorporation of cryptographic content in a query part, reflecting GS1 Digital Link encoding.

The following URI is an example of the incorporation of cryptographic content in a query part, the URI comprising an AutolD URL containing data in conformance with ANSI MH10.8.2 encoding.

The following URI is an example of the incorporation of cryptographic content in a query part, the URI comprising an AutolD URL containing data in conformance with ANSI MH10.8.2 encoding using the secondary serial number code.

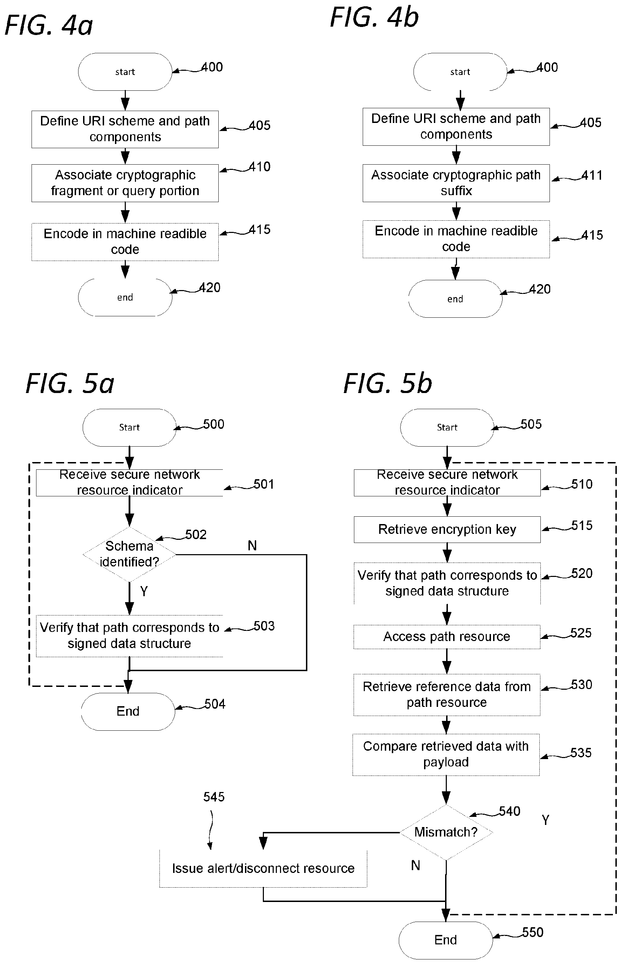

Figure 4a summarizes a method in accordance with this first set of embodiments.

As shown in figure 4a, the method starts at step 400 before proceeding to step 405 at which the scheme and path components of a URI are defined. The method then proceeds to step 410 at which a cryptographic fragment or query portion is associated with the scheme and path components in the URI structure.

The method may then optionally proceed to step 415 of encoding the resulting URI in a machine readable code.

Although not shown, the method may additionally comprise further steps as described herein. It will be appreciated that in certain embodiments, steps 405 and 410 may be performed in any sequence or in parallel, and as discussed further below, may be repeated to create multiple fragment or query portions.

In another alternative set of embodiments, the cryptographic content may be added to the URI as a path portion suffix at the end of the hierarchical section.

As discussed above, a secure network resource identifier according to embodiments may be used as the basis of a secure product label, as may affixed to a product, and then scanned by a consumer or at some other point of the supply chain to confirm characteristics of the product to which the label is affixed. The GS1 Digital Link specification for example defines different levels of granularity, from the product reference (01 GTIN), Lot number (10 LOT) down to the serial number (21 S/N), which uniquely designates a particular article. It will be appreciated that the string of characters constituting the cryptographic content for a particular product may also be expected to be unique. This being so, the string of characters cryptographic content may be treated as the serial number for the product in question without otherwise undermining the labeling logic.

For example the GS1 Digital Link standard defined the Serial Number (S/N) Application Identifier "21". On this basis, the user device receiving the URI in accordance with the invention may identify the characteristic structure of a GS1 Digital Link, and the presence of the 21 code indicating that the following value is a unique identifier, and then speculatively attempt to decode the following material on the assumption that is may constitute cryptographic content in the sense of an embodiment. If the material is successfully decrypted it may be used in the same way as in other embodiments described herein, and if not, the material may be flagged as not secure, and treated in the same way as other conventional URIs. It will be noted that since the material following the 21 code is in any case a unique value the use of cryptographic content in this section does not prevent the same string being used in the designation of a network resource.

The following URI is an example of this approach.

There is accordingly provided a method of decoding a secure network resource identifier structure, the method comprising receiving a secure network resource identifier structure in accordance with embodiments as set out above, identifying a characteristic structure of a schema known to be used with secure network resource identifier structures in accordance with embodiments as set out above, isolating a part of said secure network resource identifier structure known to correspond to a unique identifier in accordance with said schema, and attempting to decrypt said isolated part of said secure network resource identifier structure. Optionally, there may be provided a further step of determining that said isolated part of said secure network resource identifier structure cannot be decrypted, and issuing an indication that said secure network resource identifier structure is not deemed secure.

Optionally, there may be provided a further step in a case where said isolated part of said secure network resource identifier structure is successfully decrypted of verifying that said path component corresponds to said signed data structure may be retrieved. The method may further optionally comprise addition steps as discussed herein with regard to any operation performed on the basis of decrypting the cryptographic content of a secure network resource identifier structure as described herein.

Figure 4b summarizes a method in accordance with this second set of embodiments.

As shown in figure 4b, the method starts at step 400 before proceeding to step 405 at which the scheme and path components of a URI are defined. The method then proceeds to step 411 at which a cryptographic path suffix with unique identifier is associated with the scheme and path components in the URI structure.

The method may then optionally proceed to step 415 of encoding the resulting URI in a machine readable code.

Although not shown, the method may additionally comprise further steps as described herein. It will be appreciated that in certain embodiments, steps 405 and 411 may be performed in any sequence or in parallel, and as discussed further below, may be repeated to create multiple path suffix portions.

Still further, in certain embodiments, steps 410 and 411 may be performed in any sequence or in parallel, and as discussed further below, may be repeated to create multiple fragment, query or path suffix portions.

Furthermore on this basis there may be provided a method of associating a unique identifier with a product, wherein the product belongs to an arborescent product classification, the method comprising the steps of composing a URI based on the classification of said product according to said arborescent product classification, obtaining an cryptographically signed data structure with respect to a secure network resource identifier as presented herein, and associating the cryptographically signed data structure with the product as said unique identifier.

It will be appreciated that any suitable series of characters at the end of the characterizing portion which cannot be resolved to a valid web resource may be defined for this purpose.

A such, there is provided a method of defining a secure network resource identifier structure, said secure network resource identifier structure comprising a Uniform Resource Identifier (URI) having scheme and path components identifying a network resource, and a path portion suffix comprising a unique identifier and a cryptographically signed data structure signed using a cryptography infrastructure.

It may be born in mind that structures in accordance with embodiments may incorporate multiple query and/or fragment and/or path suffix portions, either with multiple portions of the same type, or a combination of portions of different types (always respecting the requirements of RFC 3986, so that a fragment portion necessarily occurs after the last path suffix portion, for example).

As such, a number of possible structures have been described, each of which constitutes a secure network resource identifier in accordance with embodiments.

A number of possible uses may be envisaged for the cryptographic content part of the secure network resource identifier as defined herein.

In certain embodiments, a closer relationship between the hierarchical portion of the URI and the cryptographic portion may be envisaged. In particular, the cryptographic portion may incorporate an encrypted version of the hierarchical portion itself, or other representation of the content of the hierarchical portion itself such that the cryptographic portion may serve to authenticate the hierarchical portion. This representation may comprise a hash, signature or other representation of the hierarchical portion. Indeed, in view of a general desire to limit the size of the secure network resource identifier as a whole, and the cryptographic content in particular, the representation may be limited to only a portion of the hierarchical portion, e.g. so as to specify only the domain thereof.

As such, in order to protect a Web URI itself (that is to say, the scheme and path components identifying a network resource, and excluding a path portion suffix), the cryptographic component may contain the data already available inside to path section and the query string section of the Web URI.

This approach may constitute a method of accessing a network resource comprising receiving a secure network resource identifier structure as discussed above, retrieving a public key for the cryptographically signed data structure, verifying that the path component (and as the case may be any other parts of the secure network resource identifier not belonging to the cryptographic content) corresponds to the signed data structure, and responsive to said verification, accessing the network resource specified by said secure network resource identifier.

In order to protect a Web URI remote destination, the cryptographic content may contain some data related to the remote destination or content thereat such as a hash of a document at the destination, which may be verified on resolution of the cryptographic content.

As such, a method of accessing a network resource may comprise a further step of receiving the secure network resource identifier structure at a user device, wherein said step of verifying that said Uniform Resource Identifier corresponds to said signed data structure is performed at one of the user device or a remote server identified by said Uniform Resource Identifier.

In certain embodiments, the cryptographic content may additionally or alternatively comprise a further data payload.

As discussed above, a secure network resource identifier according to embodiments may be used as the basis of a secure product label, as may affixed to a product, and then scanned by a consumer or at some other point of the supply chain to confirm characteristics of the product to which the label is affixed.

In such a context, the further data payload may comprise a product identifier, serial number, quality label, a quality certification, an indication of Geographic Origin, and the like.

Additionally or alternatively, the data payload may incorporate a reflection of other inherent characteristics of the product which are not otherwise easily determined such date of manufacture, sugar content, alcohol content, etc. By incorporating these data in the cryptographic component, they are permanently and indelibly incorporated in the secure network resource identifier. Any discrepancy between these data and corresponding data, for example as presented at a web page indicated by the path element of the same secure network resource identifier may be flagged as evidence of tampering or deception.

A product identity may be provided at any of the levels of granularity provided by the GS1 Digital Link specification for example, comprising the product reference (01 GTIN), Lot number (10 LOT) or serial number (21 S/N).

As such, As such, a method of accessing a network resource may comprise a further step of identifying a characteristic of said secure network resource identifier structure associated with a further network resource, and retrieving reference data from the further network resource, and comparing the reference data with the further data payload. Still further, if a mismatch is detected between the reference data with said further data payload, and performing one or more of: Issuing an alert message, or disconnecting from said network resource.

Figure 5a presents a method of decoding a secure network resource identifier structure as introduced with reference to figure 4a.

As shown, the method starts at step 500 at which a secure network resource identifier structure in accordance with embodiments as set out herein is received. The method then proceeds to step 501 at which a characteristic structure of a schema known to be used with secure network resource identifier structures in accordance with embodiments as set out herein is identified. Where such a characteristic is so identified, the method proceeds to step 502 at which a part of said secure network resource identifier structure known to correspond to a unique identifier in accordance with said schema is isolated. At step 503 it is attempted to decrypt the isolated part of the secure network resource identifier structure. The method may then terminate at step 504. Alternatively, the method may loop back to step 501 to for a new URI.

Figure 5b presents a method of accessing a network resource in accordance with an embodiment.

More particularly, Figure 5b presents a method of accessing a network resource in accordance with the preceding description.

Specifically, as shown the method starts at step 505 before proceeding to step 510 at which a secure network resource indicator for example as obtained as a result of the method of figures 4a and/or 4b is received. The method proceeds to step 515 at which an encryption key is retrieved, and used to decrypt the cryptographic content of the secure network resource indicator. The method may then proceed to optional step 520 at which the decrypted cryptographic content is compared to the scheme and path portions of the secure network resource indicator.

The method may then proceed to optional step 525 at which the resource designated by the verified path is accessed, and at step 530 reference data is retrieved, and compared with the optional payload of the secure network resource indicator.

In case a mismatch is detected, for example from the comparisons at steps 520 or 535, as determined at step 540, the method may proceed to step 545 at which an alert may be issued, or the network resource disconnected.

It will be appreciated that the steps of figure 5b may be performed in a different sequence, and that any combination of the optional steps may be performed.

Accordingly, the cryptographic content may also contain additional information only available when using the secure application.

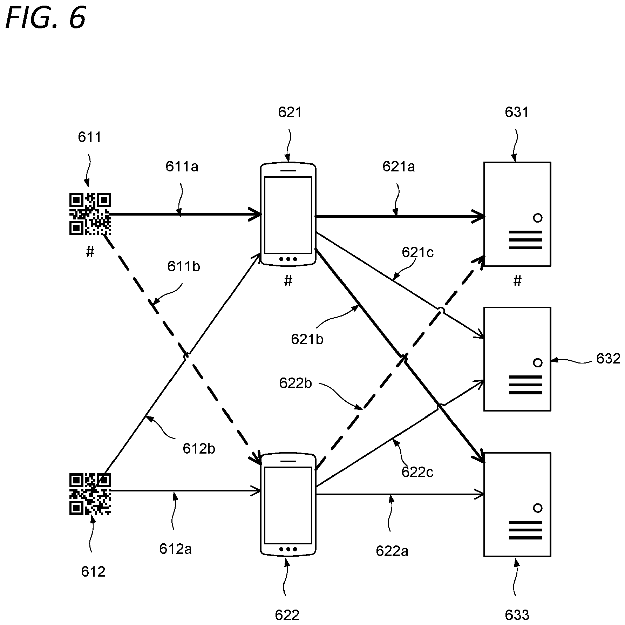

Figure 6 presents various use case scenarios arising from embodiments.

As shown in figure 6, a scenario may start from a conventional URI 612, or from a URI formed in accordance with any of the preceding embodiments 611.

Meanwhile, there may be provided a conventional device 622 incorporating merely a generic OR code scanning camera app for example, and an augmented device 621 provided with software adapted to distinguish a URI formed in accordance with any of the preceding embodiments, and to decode it as necessary.

A secure network resource identifier in accordance with embodiments represented in a 2D Code (such a QR Code) 611 can be scanned by any compliant secure mobile application 621 as represented by arrow 611a. When scanned by a compliant secure mobile application 621 (such as "otentik codes reader"), the mobile application 621 can process and display the list of visible digital seal information and optionally prompt to point to the destination URI as specified in the initial URI. If the destination server is a secure server 631, it can show that the link between the Code and the content destination is trusted, because the request comes from the secure mobile application. Access may then occur as represented by arrow 621a. The prompt is optional as the user might alternatively be connected to the secured, verified destination link.

A non-secure network resource identifier 612 (i.e., a conventional URI without cryptographic content as discussed herein) in a 2D Code may still be scanned by a compliant secure mobile application 621 as represented by arrow 612b. When scanned, the mobile application may display that the URL is not secured and prompt to point to the destination as specified in the path element of the URL. In a case where a conventional URI 612 indicates a secure server 631, this may allow access albeit without performing any additional security functions as represented by arrow 621a.

Device 622 may accordingly comprise any standard mobile application (like the default OR Code reader in the camera of the device app on iPhone and Android smartphone). The conventional situation where a conventional URI 612 is read is represented by arrow 612a. Whether the URI 612 points to a secure server or not, the address specified in the conventional URI 612 will be resolved in the usual way as represented by arrow 622a. In a scenario where device 622 reads a secure network resource identifier in a graphic code 611 as represented by arrow 611b, the destination resource as specified in the path element of the secure network resource identifier may similarly be accessed as represented by arrow 622b. If the indicated destination server is a secure server (that is, able to decrypt the cryptographic content) 631, it can process the complete secure network resource identifier and confirm that the link between the URI and the resource is trusted. If the indicated destination server is not a secure server, no addition security is provided, but the URI may still be accessed in the usual way.

A special case is represented by arrows 621c and 622c, whereby a local application (which may or may not be capable of performing security operations in accordance with embodiments) is configured to redirect access requests referenced by a URI (whether or not in accordance with embodiments) for example by replacing higher level parts of the hierarchical portion.

Using a URI for the encoding of the object identifier provides a flexible, ubiquitous platform for encoding and interpretation. Encoding the identifier provides security and supports proof of data integrity and origin. By identifying the encoding in the URI itself the autonomy of the identification system is improved, since more information is available locally.

The scheme name may be any suitable existing URI protocol or scheme name, or may be a scheme name specified for the purposes of the present invention. Typically, device operating systems or other platform software will be configured to handle URIs according to various schemes or protocols, and handle each according to its characteristics and requirements. Suitable configuration of such software can enable such devices to properly interpret any scheme adopted for implementation of the present invention.

The identification of the encoding in the URI itself supports the possibility of locally decoding the object identifier. Known systems are obliged to communicate with remote systems for the identification, decoding and verification of identifiers, whilst in accordance with the present invention these activities can be implemented locally. This means that systems implementing the invention need not have network access.

It is an advantage of this embodiment that verification can take place purely locally. The algorithms and associated parameters can all be stored in the device which is used in the verification process. The library of algorithms and associated parameters may be static, or updated regularly, for example when network connectivity is available. The possibility of regularly updating the library improves the security of the solution.

In some embodiments, the URI may optionally be defined so as to resolve to a remote network location or web site, as well as or instead of calling a local resource. The remote network location may implement some aspects of the verification process. Calling a website in this manner may also provide a mechanism allowing for a graceful handling of situations where the local device is unable to decode the object identifier for any reason. Calling a website in this manner may provide also provide a mechanism for the handling of failed verifications, either as a mechanism for notifying the user of the implications of the failed verification, or as a mechanism for reporting the failed verification to a remote server for monitoring or auditing purposes. Calling a website in this manner may further provide a mechanism for presenting ancillary information to a user in parallel with the verification process.

According to a further development of the methods described with reference to figure 5, the method may comprise the further step of notifying the result of said verification to a user. This may be performed by any convenient mechanism, for example by displaying a message of a display unit of the user device implementing the method, emitting a sound, etc.

Accordingly, embodiments take advantage of certain characteristics of the URI specification to incorporate cryptographic content in such a way that the ordinary operation of a URI is not interfered with. The cryptographic content can then be used to ensure the authenticity of the path defined in the unencrypted portion. The path may also serve to point a reading device to a network resource capable of performing the decryption operation, or for a decryption key.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a computer or any other device with processing capability, such as a robot or other connected device.

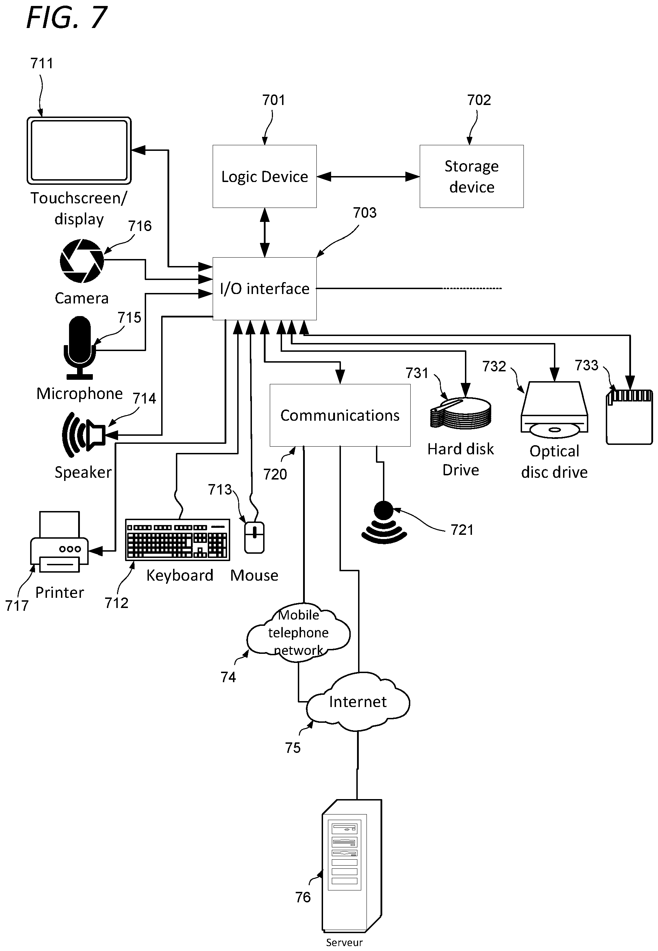

Figure 7 shows a generic computing system suitable for implementation of embodiments of the invention.

A shown in figure 7, a system includes a logic device 701 and a storage device 702. The system may optionally include a display subsystem 711, input subsystem 712, 713, 714, communication subsystem 720, and/or other components not shown.

Logic device 701 includes one or more physical devices configured to execute instructions. For example, the logic device 701 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 701 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 701 optionally may be distributed among two or more separate devices, which may be remotely located and/or configured for coordinated processing. Aspects of the logic device 701 may be virtualized and executed by remotely accessible, networked computing devices configured in a cloud-computing configuration.

Storage device 702 includes one or more physical devices configured to hold instructions executable by the logic device to implement the methods and processes described herein. When such methods and processes are implemented, the state of storage 702 device may be transformed-e.g., to hold different data.

Storage device 702 may include removable and/or built-in devices. Storage device 702 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, nonvolatile, dynamic, static, read/write, read-only, random-access, sequential-access, location-addressable, file-addressable, and/or content-addressable devices.

In certain arrangements, the system may comprise an interface 703 adapted to support communications between the Logic device 701 and further system components. For example, additional system components may comprise removable and/or built-in extended storage devices. Extended storage devices may comprise one or more types of storage device including optical memory 732 (e.g., CD, DVD, HD-DVD, Blu-Ray Disc, etc.), semiconductor memory 733 (e.g., RAM, EPROM, EEPROM, FLASH etc.), and/or magnetic memory 731 (e.g., hard-disk drive, floppy-disk drive, tape drive, MRAM, etc.), among others. Such extended storage device may include volatile, nonvolatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 701 and storage device 702 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 7 may be used to implement embodiments of the invention.

For example a program implementing the steps described with respect to figure 4a, 4b or 5 may be stored in storage device 702 and executed by logic device 701. The Logic device may cause the camera 716 or Near Field interface 721 to read the object identifier from the object, or otherwise cause the printer 717 or Near Field interface 721 to impose the object identifier and/or the machine readable code on the object. The URI path may indicate the resource 76, accessible via internet 65.

Accordingly the invention may be embodied in the form of a computer program.

Such a system may further be adapted to encode the URI in a machine readable form.

Furthermore, when suitably configured and connected, the elements of figure 7 may constitute a system for verifying a URI. The system may further be adapted to decode a remaining part of the URI using the retrieved combination of algorithm and parameters to obtain a decoded object identifier.

It will be appreciated that a "service", as used herein, is an application program executable across multiple user sessions. A service may be available to one or more system components, programs, and/or other services. In some implementations, a service may run on one or more server-computing devices.

When included, display subsystem 711 may be used to present a visual representation of data held by storage device. This visual representation may take the form of a graphical user interface (GUI). As the herein described methods and processes change the data held by the storage device 702, and thus transform the state of the storage device 702, the state of display subsystem 711 may likewise be transformed to visually represent changes in the underlying data. Display subsystem 711 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 712, mouse 711, touch screen 711, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 720 may be configured to communicatively couple computing system with one or more other computing devices. For example, communication module of may communicatively couple computing device to remote service hosted for example on a remote server 76 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 74, or a wired or wireless local- or wide-area network. In some embodiments, the communication subsystem may allow computing system to send and/or receive messages to and/or from other devices via a network such as the Internet 75. The communications subsystem may additionally support short range inductive communications 721 with passive devices (NFC, RFID etc).

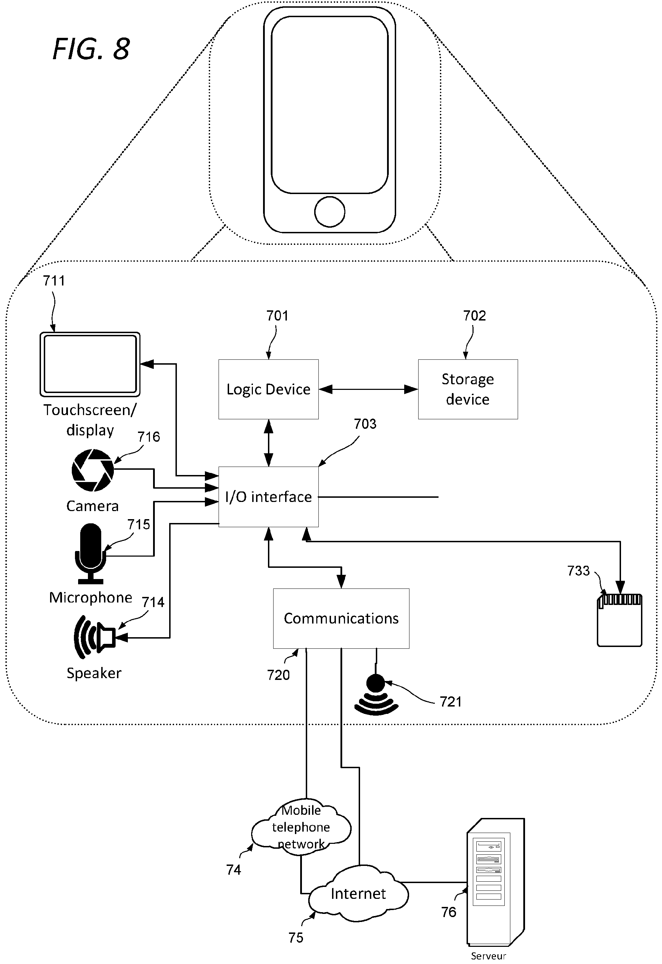

The system of figure 7 is intended to reflect a broad range of different types of information handling system. It will be appreciated that many of the subsystems and features described with respect to figure 7 are not required for implementation of the invention, but are included to reflect possible systems in accordance with the present invention. It will be appreciated that system architectures vary widely, and the relationship between the different sub-systems of figure 7 is merely schematic, and is likely to vary in terms of layout and the distribution of roles in systems. It will be appreciated that, in practice, systems are likely to incorporate different subsets of the various features and subsystems described with respect to figure 7. Figure 8 discloses further example device in accordance with the present invention. Those of ordinary skill in the art will appreciate that systems may be employed in the future which also operate in accordance with the present invention.

Figure 8 shows a smartphone device adaptable to constitute an embodiment. As shown in figure 8, the smartphone device incorporates elements 701, 702, 703, 720, 733, 714, 715, 716, 711 as described above. It is in communication with the telephone network 74 and a server 76 via the network 75. On the other hand, elements 731, 732, 717, 712, 713 are omitted. The features disclosed in this figure may also be included within a tablet device as well.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computer implemented method of defining a secure network resource identifier structure, said method comprising defining a Uniform Resource Identifier (URI) having scheme and path components identifying a network resource, and associating said scheme and path components with a fragment and/or query portion comprising a cryptographically signed data structure.

2. A computer implemented method of defining a secure network resource identifier structure, said method comprising defining a Uniform Resource Identifier (URI) having scheme and path components identifying a network resource, associating said scheme and path components with a path portion suffix comprising a cryptographically signed data structure constituting a unique identifier

3. The method of any preceding claim comprising a further step of encoding said secure network resource identifier structure in a machine readable code.

4. The method of any preceding claim wherein said Uniform Resource Identifier points to a repository from which a software application capable of verifying that said path component corresponds to said signed data structure may be retrieved.

5. A computer implemented method of accessing a network resource, said method comprising receiving a secure network resource identifier structure in accordance with any preceding claim, decrypting said cryptographically signed data structure, verifying that said path component corresponds to said signed data structure, and responsive to said verification, accessing the network resource specified by said Uniform Resource Identifier.

6. The method of claim 5 comprising a step of receiving the secure network resource identifier structure at a user device, wherein said step of verifying that said path component corresponds to said signed data structure is performed at one of the user device or a remote server identified by said path component.

7. A computer implemented method of decoding a secure network resource identifier structure, said method comprising receiving a secure network resource identifier structure in accordance with embodiments as set out above, identifying a characteristic structure of a schema known to be used with secure network resource identifier structures in accordance with embodiments as set out above, isolating a part of said secure network resource identifier structure known to correspond to a unique identifier in accordance with said schema, and attempting to decrypt said isolated part of said secure network resource identifier structure.

8. The method of any of claims 6 or 7 wherein said cryptographically signed data structure comprises a further data payload, and wherein said method comprises a further step of retrieving reference data from the network resource specified by said path component, and comparing said reference data with said further data payload.

9. The method of any of claims 6 to 8 wherein said cryptographically signed data structure comprises a further data payload, and wherein said method comprises a further step of identifying a characteristic of said secure network resource identifier structure associated with a further network resource, and retrieving reference data from said further network resource, and comparing said reference data with said further data payload.

10. A computer implemented method of associating a unique identifier with a product, wherein said product belongs to an arborescent product classification, said method comprising the steps of composing a URI based on the classification of said product according to said arborescent product classification, obtaining an cryptographically signed data structure with respect to said URI in accordance with claim 1, and associating said cryptographically signed data structure with said product as said unique identifier.

11. A data processing system comprising means for carrying out the method of any preceding claim.

12. A computer program comprising instructions which, when the program is executed by a computer, cause the computer to carry out the method of any of claims 1 to 10.

13. A computer-readable medium comprising instructions which, when the program is executed by a computer, cause the computer to carry out the method of any of claims 1 to 10.

14. A secure network resource identifier structure, comprising a Uniform Resource Identifier (URI) having scheme and path components identifying a network resource, and a fragment and/or query portion comprising a cryptographically signed data structure.

15. A secure network resource identifier structure, comprising a Uniform Resource Identifier (URI) having scheme and path components identifying a network resource, associating said scheme and path components and a path portion suffix comprising a unique identifier and a cryptographically signed data structure.
